## Europäisches Patentamt
## European Patent Office
## Office européen des brevets

(19)

(11) Numéro de publication: **0 138 929**
**B1**

(12) # FASCICULE DE BREVET EUROPÉEN

(45) Date de publication du fascicule du brevet:
02.09.87

(51) Int. Cl.⁴: **C 22 B 21/00**, C 22 B 7/04

(21) Numéro de dépôt: **84901354.5**

(22) Date de dépôt: **20.03.84**

(86) Numéro de dépôt international:
**PCT/FR 84/00070**

(87) Numéro de publication internationale:
**WO 84/03719 (27.09.84 Gazette 84/23)**

(54) **PROCEDE ET DISPOSITIF DE RECUPERATION D'ALUMINIUM LIQUIDE PAR COMPRESSION DE CRASSES CHAUDES.**

(30) Priorité: **22.03.83 FR 8305080**
**21.02.84 FR 8402790**

(43) Date de publication de la demande:
**02.05.85 Bulletin 85/18**

(45) Mention de la délivrance du brevet:
**02.09.87 Bulletin 87/36**

(84) Etats contractants désignés:
**BE CH DE FR GB LI NL**

(56) Documents cité:
**WO-A-82/01895**
**DE-A-2 312 235**
**FR-A-2 439 621**
**PL-A-49 241**
**US-A-2 278 135**
**US-A-4 057 232**

(73) Titulaire: **CEGEDUR SOCIETE DE TRANSFORMATION DE L'ALUMINIUM PECHINEY, 23, Rue Balzac, F-75008 Paris (FR)**

(72) Inventeur: **JULLIARD, Jacques, Rue des Charmilles Coublevie, F-38500 Voiron (FR)**
Inventeur: **TIRILLY, Louis, 57, rue de la Semme, F-68000 Colmar (FR)**
Inventeur: **VIGIER, Pierre, 2, rue Béranger, F-38000 Grenoble (FR)**

(74) Mandataire: **Vanlaer, Marcel, PECHINEY 28, rue de Bonnel, F-69433 Lyon Cédex 3 (FR)**

LIBER, STOCKHOLM 1987

## Description

La présente invention est relative à un procédé et à un dispositif de récupération d'aluminium liquide par compression de crasses chaudes. Il est à noter que le terme "aluminium" employé dans la rédaction de cette demande englobe également tous les alliages de cet élément.

La cycle de fabrication de l'aluminium à partir de ses minerais ou de déchets recyclés comporte généralement une phase de mise en fusion du métal suivie d'une phase de coulée. Il est connu de l'homme de l'art que, lors de cette fusion, il se forme dans les fours à la surface du bain métallique, une couche d'un produit désigné sous le nom de "crasses" et dont l'analyse montre qu'elles sont constituées de particules non métalliques telles que des oxydes, des carbures, des nitrures, etc... entre lesquelles sont emprisonnées des gouttelettes de métal. Si l'on coule tel que le contenu du four, les crasses seront entraînées et formeront dans le produit solidifié des inclusions qui donneront lieu, lors des opérations ultérieures de transformation telles que le laminage par exemple, à l'apparition sinon de défauts de surfaces ou internes, tout au moins d'hétérogénéités locales de propriétés préjudiciables à la bonne qualité desdits produits.

Il s'avère donc nécessaire d'éliminer ces crasses du métal avant la coulée, ce qu'on réalise généralement par écrémage du bain au moyen d'une racle au cours d'une opération dite de décrassage. Cependant, ces crasses peuvent contenir une proportion importante de métal allant jusqu'à 95 % de la masse de crasse et leur mise à la décharge telles qu'elles conduireit à une réduction notable de la mise au mille du métal fabriqué.

C'est pourquoi l'homme de l'art s'est efforcé de chercher des moyens permettant de récupérer la plus grande quantité possible du métal contenu dans ces crasses. Une solution consiste à traiter les crasses dans le four de fusion lui-même par un flux ayant pour effet de faire coalescer les gouttelettes de métal et de faciliter leur transfert de la crasse vers le bain métallique. Mais, outre l'influence néfaste de ces flux sur les propriétés de certains alliages, leur efficacité au niveau de la récupération demeure limitée, de sorte que, quelles que soient les possibilités de traitement dans le four, on est amené inévitablement à traiter ou à retraiter les crasses dans des dispositifs particuliers après qu'elles aient été sorties du four.

Ainsi, il est connu d'utiliser un dispositif de malaxage dans lequel la crasse est agitée en présence d'air et éventuellement de flux, de manière à provoquer l'oxydation d'une partie du métal qu'elle contient. Cette oxydation très exothermique permet de maintenir les crasses à une température suffisante pour que les gouttelettes de métal puissent coalescer et s'écouler vers le bas de la cuve où elles sont facilement séparées de la crasse.

Les crasses égouttées et chaudes passent alors dans un dispositif de martelage, puis sont séparées suivant leur granulométrie, de sorte que l'on extrait une nouvelle portion du métal ayant échappé à la séparation lors du malaxage.

Ce type de traitement présente l'inconvénient de nécessiter pour assurer l'oxydation une perte d'aluminium généralement supérieure à 10 % de celui contenu dans les crasses. De plus, la récupération du métal après martelage n'est pas complète et plus de 5 % de l'aluminium reste dans les crasses qui sont mises à la décharge.

Outre les questions de rendement métal, ce type de traitement s'effectue dans des conditions de salubrité souvent insuffisantes en raison des fumées qui peuvent être émises lors de l'oxydation et des manipulations de crasses chaudes entre les différents dispositifs de traitement sans parler des problèmes de bruit et de pollution des eaux posés par la mise à la décharge de produits contenant des flux relativement solubles qui émettent des ions nocifs.

C'est pourquoi, on a vu apparaître dans ce secteur de la technique, d'autres procédés dans lesquels on évite notamment le stade de l'oxydation et qui consistent soit à refroidir rapidement les crasses, éventuellement sous flux, dans des cylindres rotatifs et à les broyer puis à les tamiser pour séparer des fractions plus ou moins riches en aluminium.

Toutefois on est alors amené, pour refroidir, à installer des cylindres très longs, ce qui entraîne des frais d'investissement et des frais de fonctionnement relativement élevés et n'empêche pas pour autant des nuisances résultant des émissions de fumées et la perte d'une partie non négligeable de métal. De plus, des installations aussi importantes nécessitent le traitement de grandes quantités de crasses provenant forcément de fours différents, dans lesquels les qualités d'alliages ne sont pas toujours les mêmes. Il en résulte l'obtention d'un métal liquide de composition variable qui ne peut être recyclé que dans certaines conditions seulement et après analyse.

D'autres procédés dans lesquels on soumet les crasses chaudes directement à un traitement mécanique sont connus, tels que la centrifugation. Mais les réalisations n'ont généralement pas dépassées le stade du laboratoire en raison des difficultés inhérentes, lors de l'extrapolation, aux bouchages par les crasses des systèmes d'évacuation du liquide.

C'est pourquoi, la demanderesse ayant donc constaté que les différentes solutions proposées résolvaient de façon tout à fait imparfaite le problème de la récupération de l'aluminium des crasses a cherché à mettre au point un procédé dans lequel on évite les inconvénients cités plus haut, à savoir:

- la perte d'aluminium par oxydation et les limitations du rendement de récupération,
- le recours à des flux polluants et chers,
- les nuisances occasionnées par les fumées et

2

le bruit,
- les mélanges de crasses de sources différentes,
- la mise en oeuvre d'installations coûteuses en frais d'investissement et de fonctionnement.

Elle s'est tournée pour cela vers la compression des crasses dans une presse unidirectionnelle verticale. Certes, cette technique a déjà été mise en pratique. C'est ainsi qu'on connaît, par exemple, par l'USP 2 275 135, la récupération d'étain liquide à partir de crasses formées d'un intermétallique solide antimoine-aluminium dans une matrice de diamètre 15 cm. De même, la DE-OS 2 312 235 décrit un procédé et un dispositif d'extraction de plomb liquide par chauffage entre 350° et 550°C à partir de crasses ayant la forme de compactés d'un diamètre de 50 mm et d'un poids de 500 g.

On peut constater que dans l'un et l'autre de ces documents, d'une part, aucun enseignement n'est donné sur la manière particulière d'utiliser une presse lorsqu'on la destine à comprimer des crasses. Or, ces crasses sont constituées par un matériau semi-solide dont le comportement est tout à fait différent de celui des poudres ou d'autres matériaux solides qui représentent la majeure partie des matériaux soumis généralement à un tel traitement.

De plus, la compression vise notamment à densifier et à modifier la forme du matériau comprimé alors qu'ici il s'agit de rassembler de fines gouttelettes de liquide dispersées dans la masse de la crasse et de l'expulser de cette masse.

D'autre part, il n'est nullement tenu compte dans les documents des difficultés inhérentes à une extrapolation du procédé à l'échelle industrielle. Or, passer de la compression dans une matrice de 15 cm de diamètre ou traitant des comprimés de 500 g à la compression d'une tonne de produit dans une matrice de diamètre voisin de 1 mètre soulève des difficités dont la demanderesse a pu faire l'expérience.

Il faut ajouter que le traitement de crasses d'aluminium constituées par une masse de métal ayant un point de fusion de 660°C et d'oxydes de faible conductibilité thermique et fusibles au voisinage de 2000°C n'a rien de commun avec l'extraction d'étain fondant à 232°C ou de plomb fondant à 327°C dispersés dans une crasse aux propriétés différentes.

C'est pourquoi, la demanderesse s'est rendue compte de la nécessité d'une adaptation du procédé de compression lorsqu'on l'applique à la recuperation à l'échelle industrielle de l'aluminium liquide contenu dans des crasses chaudes et qu'on souhaite extraire la majeure partie de ce métal.

Le procédé selon l'invention consiste à charger les crasses dans une matrice de section circulaire que l'on place entre le poinçon et la table d'une presse inidirectionnelle verticale et se caractérise en ce que le poinçon étant appliqué sur la partie supérieure des crasses, on le descend avec une vitesse maximum jusqu'à l'apparition d'un écoulement de liquide à la partie inférieure de la matrice puis avec une vitesse d'autant plus faible que la concentration en aluminium liquide des crasses est petite.

Ainsi, la demanderesse a trouvé qu'il fallait imprimer au poinçon de la presse un régime particulier de vitesse pour obtenir un bon rendement d'extraction de ce métal.

Ce régime comprend une descente rapide du poinçon tant que le métal ne fait que suinter à la base de la masse de crasses. Puis, dès que se manifeste un écoulement continu de liquide, la descente du poinçon est ralentie et ce jusqu'à la fin de l'écoulement.

Mais la demanderesse a constaté que cette vitesse devait avoir une valeur dépendant de la composition des crasses ou plutôt du rapport des masses entre le liquide contenu et la crasse initiale. Ainsi, la vitesse de descente du poinçon doit être d'autant plus faible que la concentration des crasses en aluminium liquide est petite.

De façon plus précise, on peut dire que la vitesse répond à la relation:

$$V \text{ mm/mn} = K \times \frac{\text{masse de liquide}}{\text{masse de crasses}}$$

dans laquelle K est une constante dont la valeur est comprise entre 150 et 300.

Cette relation semble s'expliquer par le fait que l'augmentation de la compacité de la masse de crasses sous l'effet de la compression ne doit pas être trop rapide pour ne pas freiner le rassemblement et l'écoulement des gouttelettes de liquide. Il faut donc tendre à obtenir un débit de métal constant et n'atteindre le volume de crasses minimum et donc la pression maximum qu'en fin de compression. Ce qui importe en fait c'est plus la vitesse que la pression finale atteinte.

On tient donc compte de le teneur en liquide de la crasse pour déterminer le régime de vitesse à appliquer. Dans certains cas, on adopte une vitesse constante et on se contente pour la déterminer d'une analyse d'un échantillon moyen de la crasse à traiter, mais, on peut aussi avoir un régime de vitesse variable au cours du temps tenant compte de l'évolution de la concentration liquide de la crasse et, dans ce cas, on détermine au préalable la loi de variation à partir d'une opération de compression type.

La demanderesse a aussi trouvé que la hauteur des crasses chargées dans la matrice constitue un facteur important pour obtenir un bon rendement d'extraction. C'est ainsi que cette hauteur H, mesurée à la périphérie de la matrice, doit tenir compte du diamètre D de ladite matrice, et que précisément le rapport $\frac{D}{H}$ doit être compris entre 0,5 et 1,5.

La demanderesse a également constaté que cette hauteur ne devait pas être la même sur toute la section de la matrice, mais, plus faible au centre qu'à la périphérie, de sorte que la masse des crasses présente dans sa partie inférieure une face conique concave. Cette conicité participe avec le rapport $\frac{D}{H}$ à la répartition

convenable des pressions à l'intérieur du volume des crasses et doit être de préférence tel que la différence de hauteur Δh de crasses en mm entre la périphérie et le centre soit comprise entre 0,5 ($\frac{Dmm}{100}$)² et 1,5 ($\frac{Dmm}{100}$)².

Il est à remarquer que pour des valeurs de D inférieures à 250 mm, Δh peut être égal à 0, ce qui montre que pour des matrices de laboratoire une telle caractéristique était sans intérêt.

La présente invention concerne également un dispositif de compression des crasses de taille industrielle.

Ce dispositif ne concerne pas la presse unidirectionnelle elle-même, mais un dispositif particulier destiné à être placé temporairement entre le poinçon et la table de la presse comprenant un socle sur lequel repose une matrice cylindrique équipée à chacune de ses extrémités d'un grain circulaire espacé de la paroi intérieure de la matrice et caractérisé en ce que le socle présente sur sa face supérieure une rainure annulaire dont le fond communique avec l'extérieur, que le grain inférieur est séparable du socle, a un diamètre au moins égal au diamètre intérieur de la rainure et, en tout cas, inférieur au diamètre extérieur de la rainure et présente une face supérieure continue de forme conique, que l'espace entre la paroi dudit grain et la paroi intérieure de la matrice est de largeur constante et placée en regard de la rainure. Ainsi, le dispositif selon l'invention concerne un ensemble matrice-socle amovible que l'on peut placer sur la table d'une presse unidirectionnelle de manière à pouvoir soumettre les crasses contenues dans la matrice à la force de compression exercée par le poinçon lorsqu'il se déplace verticalement de haut en bas vers la table. Toute presse classique industrielle ayant une force suffisante peut être utilisée dans la présente invention en adaptant comme il convient les formes extérieures du dispositif à ses dimensions.

Ce dispositif comprend donc, d'une part, un socle amovible réalisé en acier moulé qui repose par sa base sur la table de la presse. Ce socle se caractérise par la présence sur sa face supérieure d'une rainure annulaire qui s'enfonce en son sein suivant une profondeur plus ou moins grande et dont la largeur est généralement supérieure à l'espace qui sépare la paroi intérieure de la matrice de la paroi latérale du grain inférieur.

Le fond de cette rainure est incliné par rapport à l'horizontale et son point bas communique avec l'extérieur de manière à pouvoir être mis en relation avec la partie haute d'un bac de stockage muni de moyens de chauffage adéquats.

La face supérieure de ce socle est également munie en son centre d'une cavité de forme cylindrique qui s'allonge pratiquement sur toute sa hauteur et dans laquelle vient se loger un appendice équipant le grain inférieur. Ce grain ayant la forme d'un disque repose horizontalement sur le socle dans une position guidée par l'appendice et peut être facilement séparé du socle. Le diamètre extérieur du grain est au moins égal au diamètre intérieur de la rainure c'est-à-dire que sa paroi extérieure peut prolonger la paroi intérieure de la rainure mais il peut aussi être légèrement plus grand de manière que sa paroi surplombe la rainure. Toutefois, le diamètre doit être tel qu'il laisse la majeure partie de la rainure ouverte vers le haut.

Le grain inférieur est également caractérisé en ce qu'il présente une face supérieure continue, c'est-à-dire qu'elle ne comporte aucune perforation ou autre orifice d'écoulement; cette face n'est pas plane mais se projette vers l'extérieur en formant un cône de demi-angle au sommet compris de préférence entre 75 et 85 degrés.

Le dispositif selon l'invention comprend d'autre part une matrice, sorte de cylindre en acier coulé, de hauteur et de diamètre intérieur sensiblement voisins, et de diamètre hors tout à peu près identique au diamètre du socle.

Ce cylindre est muni à chacune des ses extrémités inférieure et supérieure d'un collet. Le collet supérieur sert de moyen de fixation à un système d'amarrage permettant de le soulever ou de le déposer sur le socle; le collet inférieur constitue l'assise de la matrice sur le socle et il est muni, à sa partie inférieure, d'emboîtements qui viennent s'ajuster sur des emboîtements correspondants dont est munie la face supérieure du socle à l'extérieur de la rainure annulaire. Ces emboîtements ont des surfaces de contact inclinées par rapport à la verticale, de manière à éviter tout frettage d'une pièce sur l'autre et à rendre ces dernières facilement séparables en dépit des contraintes thermiques qu'elles subissent.

Lorsque la matrice repose sur le socle, sa paroi intérieure est séparée de la paroi du grain inférieur par un espace de largeur constante sur toute sa périphérie, cet espace étant placé au-dessus et à l'aplomb de la rainure. Cet espace a une largeur comprise entre 5 et 20 mm et généralement inférieure à la largeur de la rainure. Cette matrice est équipée sur sa paroi latérale d'un système de chauffage permettant de porter sa température à 200° C au moins au-dessus du point de fusion de l'aluminium, c'est-à-dire à plus de 860° C.

La paroi latérale de la matrice est recouverte sur sa portion de surface comprise entre les deux collets par un calorifuge.

En haut de la matrice, est disposé le grain supérieur, sorte de disque en acier muni d'un crochet sur sa face supérieure et séparé des crasses par une couche d'isolant thermique et qui peut se déplacer librement à à l'intérieur de la matrice, mais avec un jeu très limité.

Le cycle de fontionnement du dispositif selon l'invention est le suivant: l'ensemble socle-matrice-bac de stockage est amené au moyen d'un chariot à fourches, par exemple, à proximité du four à décrasser. La matrice, ayant été portée à une température voisine de 900° C, est alors remplie de crasses puis fermée à l'aide de la couche d'isolant thermique pour éviter toute émission de fumées. On véhicule ensuite l'ensemble jusqu'à la table de la presse et on descend le grain supérieur à l'intérieur de la matrice. Le poinçon de la presse s'abaisse alors de manière à soumettre les crasses, par l'intermédiaire du grain supérieur, à une pression telle que leur hauteur soit réduite progressivement à au moins 1/4 de la hauteur initiale. Dans ces conditions, l'aluminium liquide est chassé vers le bas de manière continue et s'écoule sur la face conique du grain supérieur avant de s'échapper par l'espace prévu entre la paroi du grain supérieur et la paroi intérieure de la matrice et de tomber dans la rainure annulaire où il suit la pente pour sortir du socle et être recueilli dans le bac de stockage. La largeur de l'espace entre matrice et grain inférieur a été conçu de manière à permettre au métal de s'échapper facilement de la matrice sans pour autant provoquer de bouchages par entraînement de particules de crasses.

L'utilisation de la compression pour récupérer l'aluminium des crasses n'a pas connu d'application industrielle en raison également des difficultés qui accompagnaient l'extraction du gâteau après compression. Mais le dispositif selon l'invention permet d'y parer. En effet, si, dans les meilleures conditions opératoires, il suffit de maintenir le poinçon appuyé sur le gâteau et de soulever la matrice au moyen d'un palan accroché au collet supérieur pour laisser en place le gâteau et les deux grains sur le socle, ensemble dont il est alors facile de séparer les éléments, par contre, le plus souvent, cette manoeuvre s'avère impossible. Il faut pouvoir procéder de manière différente. Le fait que le grain inférieur soit séparable du socle le permet. Pour celà, après avoir relevé le poinçon, l'ensemble matrice-gâteau-grains est soulevé de manière à libérer l'appendice du socle. Puis, la matrice est maintenue en place au moyen d'un support placé au-dessous du collet supérieur. Le poinçon est alors abaissé et vient s'appuyer sur le grain supérieur qu'il expulse de la matrice en même temps que le gâteau et le grain inférieur.

Le gâteau est alors facilement désolidarisé des deux grains.

Un tel dispositif présente de nombreux avantages par rapport à ceux de l'art antérieur.

Il permet de récupérer les crasses sur le lieu même où a lieu l'écrémage sans nécessiter de volume de stockage intermédiaire et donc sans procéder à des transferts, sources de nuisances.

Les crasses étant traitées par lots, en quantités relativement petites, d'origine bien repérée, le métal récupéré est de composition connue et peut donc être recyclé directement sans analyse.

Aucune perte d'aluminium par oxydation n'est à enregistrer et le rendement d'extraction proprement dit est amélioré de sorte que le rendement global de récupération est supérieur à celui de tous les autres dispositifs. Les problèmes relatifs aux flux deviennent sans objet.

L'installation mise en oeuvre recourt à une presse pour laquelle les frais d'investissement et de fonctionnement restent relativement modérés.

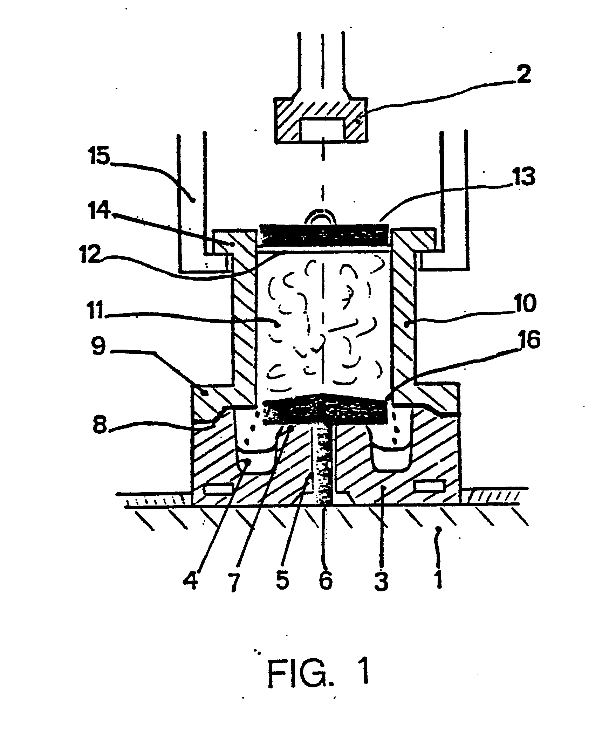

La présente invention sera mieux comprise à l'aide de la figure unique ci-jointe qui représente en coupe verticale le dispositif revendiqué. On y distingue la table de la presse (1) et le poinçon (2) entre lesquels sont placés le socle (3) présentant une rainure annulaire (4), une cavité (5) dans laquelle est engagé l'appendice (6) du grain inférieur (7) dont la face supérieure est de forme conique. Ce socle est pourvu d'emboîtements (8) sur lesquels repose, par l'intermédiaire de son collet inférieur (9), la matrice (10) remplie de crasses (11) sur lesquelles sont posés une couche d'isolant (12) et le grain supérieur (13) et qui est munie d'un collet supérieur (14) permettant son déplacement vers le haut au moyen d'un système de levage (15). Le repère (15) montre l'espace entre le grain inférieur et la paroi intérieure de la matrice.

L'invention peut être illustrée au moyen de l'exemple d'application suivant: une matrice, de diamètre intérieur 1050 mm, de hauteur 870 mm, chauffée à 810°C, placée sur un socle présentant une rainure annulaire de largeur 130 mm, de profondeur de 100 à 150 mm et un grain inférieur de diamètre extérieur 1030 mm, a été remplie avec 550 kg de crasses contenant 50 % de métal et disposée sous le poinçon d'une presse de 600 tonnes. Les crasses occupaient une hauteur de 800 mm à la périphérie et de 710 mm au centre. La vitesse de descente du poinçon a été de 75 mm/mn et on a récupéré plus de 95 % de l'aluminium contenu. La pression finale était de 8 MPa.

La présente invention trouve son application dans l'industrice de l'aluminium quand on veut traiter des crasses de façon économique et dans de bonnes conditions de salubrité.

**Revendications**

1. Procédé de récupération d'aluminium ou d'alliage d'aluminium liquide par compression de crasses chaudes chargées dans une matrice de section circulaire que l'on place entre le poinçon et la table d'une presse unidirectionnelle verticale, caractérisé en ce que le poinçon étant appliqué sur la partie supérieure des crasses, on le descend avec une vitesse maximum jusqu'à l'apparition d'un écoulement de liquide à la partie inférieure de la matrice, puis avec une vitesse d'autant plus faible que la concentration en aluminium ou alliage d'aluminium liquide des crasses est petite.

2. Procédé selon la revendication 1, caractérisé en ce qu'à l'apparition d'un écoulement de liquide à la partie inférieure de la matrice, la vitesse répond à la relation:

$$V_{mm/mn} = K \frac{\text{masse de liquide}}{\text{masse de crasses}}$$

ou K est compris entre 150 et 300.

3. Procédé selon la revendication 1, caractérisé en ce que l'on charge les crasses sur une hauteur H mesurée à la périphérie de la matrice, telle que D/H soit compris entre 0,5 et 1,5, D représentant le diamètre de la matrice.

4. Procédé selon la revendication 1, caractérisé en ce que la hauteur de crasses chargées est moins grande au centre de la matrice qu'à la periphérie.

5. Procédé selon la revendication 4, caractérisé en ce que la différence de hauteur de crasses en mm chargées à la périphérie et au centre est comprise entre:

0,5 $(\frac{Dmm}{100})^2$ et 1,5 $(\frac{Dmm}{100})^2$

D étant le diamètre en mm de la matrice.

6. Dispositif de récupération d'aluminium ou d'alliage d'aluminium liquide par compression de crasses chaudes et d'extraction facile du gâteau de crasses comprimées destiné à être mis en place de façon temporaire entre le poinçon (2) et la table (1) d'une presse unidirectionnelle, comprenant un socle (3) sur lequel repose une matrice cylindrique (10) remplie de crasses (11) équipée à chacune des ses extrémités de grains circulaires (7) et (13), caractérisé en ce que le socle présente, sur sa face supérieure, une rainure annulaire (4) dont le fond communique avec l'extérieur, que le grain inférieur (7) est séparable du socle, a un diamètre au moins égal au diamètre intérieur de la rainure et en tout cas inférieur au diamètre extérieur de la rainure, et présente une face supérieure continue se projetant vers l'extérieur en formant un cône, que l'espace (16) entre la paroi latérale dudit grain et la paroi latérale intérieure de la matrice a une largeur constante se situant dans un plan horizontal et en regard de la rainure.

7. Dispositif selon la revendication 6 caractérisé en ce que le cône formé par la face supérieure du grain inférieur a un demi-angle au sommet compris entre 75 et 85 degrés.

8. Dispositif selon la revendication 6, caractérisé en ce que l'espace entre la paroi latérale du grain inférieur et la paroi latéral intérieure de la matrice a une largeur comprise entre 5 et 20 mm.

9. Dispositif selon la revendication 6, caractérisé en ce que la largeur de la rainure est supérieure à l'espace qui sépare la paroi latérale du grain inférieur de la paroi latérale intérieure de la matrice.

10. Dispositif selon la revendication 6, caractérisé en ce que le fond de la rainure annulaire est incliné par rapport à l'horizontale.

11. Dispositif selon la revendication 6, caractérisé en ce que le grain inférieur est équipé, sur sa face inférieure, d'un appendice (6) perpendiculaire à ladite face, et de forme cylindrique qui pénètre à l'intérieur d'une cavité (5) pratiquée dans le socle.

12. Dispositif selon la revendication 6, caractérisé en ce que la matrice repose sur le socle par l'intermédiaire d'emboîtements (8) à surfaces de contact inclinées par rapport à la verticale.

13. Dispositif selon la revendication 6,

caractérisé en ce que la matrice est équipée à chacune de ses parties inférieure et supérieure de collets (9) et (14).

14. Dispositif selon la revendication 6, caractérisé en ce que le point bas de la rainure annulaire du socle débouche vers l'extérieur dans un bac de stockage chauffé.

15. Dispositif selon la revendication 6, caractérisé en ce que la paroi latérale externe de la matrice est équipée d'un système de chauffage et calorifugée.

16. Dispositif selon la revendication 6, caractérisé en ce que le grain supérieur est séparé des crasses par une couche d'isolant thermique (12).

17. Procédé d'extraction du gâteau de crasses comprimées au moyen du dispositif selon la revendication 6, caractérisé en ce que le poinçon étant relevé, on soulève l'ensemble gâteau-matrice-grains et le maintient à l'écart du socle puis, on abaisse le poinçon de manière à extraire le grain inférieur et le gâteau par le bas.

**Patentansprüche**

1. Verfahren zum Rückgewinnen von flüssigem (r) Aluminium oder Aluminiumlegierung durch Kompression heißer Schlacken, die in eine Matrize kreisförmigen Querschnitts eingeführt werden, die zwischen dem Stempel und dem Tisch einer einseitig gerichteten Vertikalpresse angeordnet wird,

dadurch gekennzeichnet,

daß man den auf den oberen Teil der Schlacken aufgebrachten Stempel mit einer Maximalgeschwindigkeit bis zum Auftreten eines Flüssigkeitsstromes im unteren Teil der Matrize und anschließend mit einer um so niedrigeren Geschwindigkeit absenkt, je geringer die Konzentration der Schlacken an flüssigem (r) Aluminium oder Aluminiumlegierung ist.

2. Verfahren nach dem Anspruch 1,

dadurch gekennzeichnet,

daß beim Auftreten eines Flüssigkeitsstromes im unteren Teil der Matrize die Geschwindigkeit der Beziehung

$$V_{mm/min} = K \frac{Flüssigkeitsmenge}{Schlackenmenge}$$

entspricht, wobei K im Bereich von 150 bis 300 liegt.

3. Verfahren nach dem Anspruch 1,

dadurch gekennzeichnet,

daß man die Schlacken auf eine am Umfang der Matrize gemessene Höhe H derart einführt, daß D/H im Bereich von 0,5 bis 1,5 liegt, wobei D den Durchmesser der Matrize bedeutet.

4. Verfahren nach dem Anspruch 1,

dadurch gekennzeichnet,

daß die Höhe eingeführter Schlacken in der Mitte der Matrize weniger groß als am Umfang ist.

5. Verfahren nach dem Anspruch 4,

dadurch gekennzeichnet,
daß der Höhenunterschied von am Umfang und in der Mitte eingeführten Schlacken in mm im Bereich von:

$$0,5 \left(\tfrac{Dmm}{100}\right)^2 \text{ bis } 1,5 \left(\tfrac{Dmm}{100}\right)^2$$

liegt, wobei D der Durchmesser der Matrize in mm ist.

6. Vorrichtung zum Rückgewinnen von flüssigem (r) Aluminium oder Aluminiumlegierung durch Kompression heißer Schlacken und zum leichten Entnehmen des Kuchens komprimierter Schlacken, die zur zeitweiligen Anordnung zwischen dem Stempel (2) und dem Tisch (1) einer einseitig gerichteten Presse bestimmt ist und einen Sockel (3) aufweist, auf dem eine mit Schlacken (11) gefüllte, an jedem ihrer Enden mit kreisförmigen Einsätzen (7) und (13) ausgerüstete zylindrische Matrize (10) ruht,
dadurch gekennzeichnet,
daß der Sockel an seiner Oberseite eine ringförmige Nut (4) aufweist, deren Boden mit dem Äußeren in Verbindung steht, daß der untere Einsatz (7) vom Sockel trennbar ist, einen dem Innendurchmesser der Nut wenigstens gleichen und auf jeden Fall geringeren Durchmesser als den Außendurchmesser der Nut hat und eine nach außen unter Bildung eines Kegels vorspringende stetige Oberseite hat, daß der Raum (16) zwischen der Seitenwand dieses Einsatzes und der inneren Seitenwand der Matrize eine konstante in einer Horizontalebene und geradlinig zur Nut liegende Weite hat.
— 7. Vorrichtung nach dem Anspruch 6,
dadurch gekennzeichnet,
daß der durch die Oberseite des unteren Einsatzes gebildete Kegel einen Halbwinkel am Scheitel im Bereich von 75 bis 85° hat.

8. Vorrichtung nach dem Anspruch 6,
dadurch gekennzeichnet,
daß der Raum zwischen der Seitenwand des unteren Einsatzes und der inneren Seitenwand der Matrize eine Weite im Bereich von 5 bis 20 mm hat.

9. Vorrichtung nach dem Anspruch 6,
dadurch gekennzeichnet,
daß die Breite der Nut größer als der Abstand ist, der die Seitenwand des unteren Einsatzes von der inneren Seitenwand der Matrize trennt.

10. Vorrichtung nach dem Anspruch 6,
dadurch gekennzeichnet,
daß der Boden der Nut zur Horizontalen geneigt ist.

11. Vorrichtung nach dem Anspruch 6,
dadurch gekennzeichnet,
daß der untere Einsatz an seiner Unterseite mit einem zu dieser Seite senkrechten Ansatz (6) zylindrischer Form ausgerüstet ist, der das Innere eines im Sockel gebildeten Hohlraumes (5) durchsetzt.

12. Vorrichtung nach dem Anspruch 6,
dadurch gekennzeichnet,
daß die Matrize auf dem Sockel mittels Ausnehmungen (8) mit zur Vertikalen geneigten Kontaktflächen ruht.

13. Vorrichtung nach dem Anspruch 6,
dadurch gekennzeichnet,
daß die Matrize an jeder ihrer Unter- und Oberseiten mit Flanschen (9) und (14) ausgebildet ist.

14. Vorrichtung nach dem Anspruch 6,
dadurch gekennzeichnet,
daß der Tiefpunkt der ringförmigen Nut des Sockels nach außen in einem erhitzten Speicherbehälter mündet.

15. Vorrichtung nach dem Anspruch 6,
dadurch gekennzeichnet,
daß die äußere Seitenwand der Matrize mit einem Heizsystem ausgerüstet und wärmeisoliert ist.

16. Vorrichtung nach dem Anspruch 6,
dadurch gekennzeichnet,
daß der obere Einsatz von den Schlacken durch eine Wärmeisoliermaterialschicht (12) getrennt ist.

17. Verfahren zum Entnehmen des Kuchens von mittels der Vorrichtung nach dem Anspruch 6 komprimierter Schlacken,
dadurch gekennzeichnet,
daß man bei angehobenem Stempel die Gruppe Kuchen-Matrize-Einsätze anhebt und sie im Abstand vom Sockel hält und man dann den Stempel derart senkt, daß der untere Einsatz und der Kuchen nach unten ausgestoßen werden.

**Claims**

1. A process for the recovery of liquid aluminium or aluminium alloy by compression of hot dross which is loaded into a die of circular section which is placed between the punch and the table of a vertical unidirectional press, characterised in that, the punch being applied to the upper part of the dross, it is moved downwardly at a maximum rate until a flow of liquid appears at the lower part of the die, and then at a rate which is lower in proportion to a lower level of concentration of liquid aluminium or aluminium alloy in the dross.

2. A process according to claim 1 characterised in that, upon the appearance of a flow of liquid at the lower part of the die, the rate of movement corresponds to the following relationship:

$$V\,mm/min = K\,\tfrac{mass\ of\ liquid}{mass\ of\ dross}$$

in which K is between 150 and 300.

3. A process according to claim 1 characterised in that the dross is loaded into the die over a height H measured at the periphery of the die, such that D/H is between 0.5 and 1.5, D representing the diameter of the die.

4. A process according to claim 1 characterised in that the height of dross loaded into the die is less at the centre of the die than at the periphery.

5. A process according to claim 4 characterised in that the difference in height of dross in mm loaded into the die at the periphery and at the centre is between:

$$0.5 \left(\tfrac{Dmm}{100}\right)^2 \text{ and } 1.5 \left(\tfrac{Dmm}{100}\right)$$

D being the diameter in millimetres of the die.

6. Apparatus for the recovery of liquid aluminium or aluminium alloy by compression of hot dross and easy extraction of the cake of compressed dross, which is intended to be temporarily placed between the punch (2) and the table (1) of a unidirectional press, comprising a base (3) on which rests a cylindrical die (10) filled with dross (11) and provided at each of its ends with circular insert members (7 and 13), characterised in that, on its upper face, the base has an annular groove (4) whose bottom communicates with the exterior, that the lower insert member (7) is separable from the base, is of a diameter at least equal to the inside diameter of the groove and in any case less than the outside diameter of the groove, and has a continuous upper face which projects outwardly, forming a conical configuration, and that the space (16) between the side wall surface of said insert member and the internal side wall surface of said die is of a constant width which is disposed in a horizontal plane and facing the groove.

7. Apparatus according to claim 6 characterised in that the cone formed by the upper face of the lower insert member has a half-angle at its apex of between 75 and 85.

8. Apparatus according to claim 6 characterised in that the space between the side wall surface of the lower insert member and the internal side wall surface of the die is of a width of between 5 and 20 mm.

9. Apparatus according to claim 6 characterised in that the width of the groove is greater than the space which separates side wall surface of the lower insert member from the internal side wall surface of the die.

10. Apparatus according to claim 6 characterised in that the bottom of the annular groove is inclined with respect to the horizontal.

11. Apparatus according to claim 6 characterised in that on its lower face, the lower insert member is provided with a projection (6) which is perpendicular to said face and which is of cylindrical shape which penetrates into a cavity (5) provided in the base.

12. Apparatus according to claim 6 characterised in that the die rests on the base by way of engagement means (8) having contact surfaces which are inclined with respect to the vertical.

13. Apparatus according to claim 6 characterised in that the die is provided with collars (9) and (14) in each of its upper an lower parts.

14. Apparatus according to claim 6 characterised in that the low point of the annular groove of the base opens towards the exterior into a heated storage tank.

15. Apparatus according to claim 6 characterised in that the outside side wall of the die is provided with a heating system an is heat-insulated.

16. Apparatus according to claim 6 characterised in that the upper insert member is separated from the dross by a layer (12) of thermal insulation.

17. A process for extracting the cake of dross compressed by means of the apparatus according to claim 6 characterised in that, the punch being raised, the assembly of cake, die and insert members is raised an maintained at a spacing from the base,then the punch is lowered so as to extract the lower insert member and the cake through the bottom.

1/1

FIG. 1